# EUROPÄISCHE PATENTSCHRIFT

(11) **EP 1 710 548 B1**
(45) Veröffentlichungstag und Bekanntmachung des Hinweises auf die Patenterteilung: **11.03.2009**
(21) Anmeldenummer: 06007209.7
(22) Anmeldetag: 05.04.2006
(51) Int. Cl.: G01J 1/42, B60Q 1/14

(54) **Erkennung der Umgebungslichtverhältnisse und entsprechende Steuerung eines Fahrzeugscheinwerfers**
Ambient light detection and corresponding control of a motor vehicle head lamp
Détection du niveau de luminosité ambiante et commande correspondante d'un phare de véhicule

(30) Priorität: 05.04.2005 DE 102005015603
(43) Veröffentlichungstag der Anmeldung: 11.10.2006
(73) Patentinhaber: Volkswagen Aktiengesellschaft, 38436 Wolfsburg (DE); Dr. Ing. h.c. F. Porsche Aktiengesellschaft, 70435 Stuttgart (DE)
(72) Erfinder: Kulinna, Hans-Jürgen, 29392 Wesendorf (DE); Bökenkamp, Ekkehard, 76133 Karlsruhe (DE)
(74) Vertreter: Rabe, Andreas

(56) Entgegenhaltungen:
- DE-A1- 10 116 490
- DE-A1- 10 328 215
- US-A- 3 828 220

## Beschreibung

Die vorliegende Erfindung betrifft ein Verfahren zum Erkennen der Lichtverhältnisse in der Umgebung eines sich bewegenden Objekts. Ferner betrifft die Erfindung ein Verfahren und eine Vorrichtung zum Steuern einer nach außen abstrahlenden lichttechnischen Einrichtung eines Fahrzeugs.

Es sind kombinierte Regen/Lichtsensoren für Fahrzeuge bekannt. Mit Hilfe dieser Sensoren kann die Scheibenwischvorrichtung des Fahrzeugs automatisch gesteuert werden. Das Signal des Lichtsensors kann außerdem zur Steuerung des Fahrlichts verwendet werden. Beispielsweise kann in Abhängigkeit von den detektierten Lichtverhältnissen das Abblendlicht und das entsprechende Schlusslicht des Fahrzeugs automatisch ein- und ausgeschaltet werden.

Derartige_Sensoren sind beispielsweise aus der DE 102 14 421 A1, der DE 42 00 700 C2, der DE 198 27 044 C1 US 3,828,220, und der DE 103 28 215 A1 bekannt.

Bei einem fahrenden Objekt, wie einem Fahrzeug, tritt das Problem auf, dass die von dem Lichtsensor gemessene Beleuchtungsstärke häufig sehr schnell wechselt. Der Grund für die schnelle Änderung der Beleuchtungsstärke auf dem Messfeld des Lichtsensors ist jedoch normalerweise nicht eine Änderung der allgemeinen Lichtverhältnisse in der Umgebung des Fahrzeugs, sondern Abschattungseffekte oder eine direkte Bestrahlung des Messfeldes, beispielsweise durch die tiefstehende Sonne bei Dämmerung. Für die Steuerung des Fahrlichts ist es jedoch besonders wichtig, die Lichtverhältnisse bei einer frühen Dämmerung zu erkennen. Bei Dämmerung treten jedoch Abschattungseffekte und der direkte Lichteinfall von der Sonne auf den Sensor besonders häufig auf. Um das permanente Ein- und Ausschalten des Fahrlichts zu vermeiden, wurde daher der Zustand des Fahrlichts nur dann geändert, wenn die Beleuchtungsstärke innerhalb eines bestimmten Zeitintervalls in einem bestimmten Bereich verblieb. Traten in diesem Fall in dem Zeitintervall Beleuchtungsstärken außerhalb dieses Bereichs auf, beispielsweise aufgrund von Abschattungen oder direktem Lichteinfall, wurde der Zustand des Fahrlichts nicht geändert. Nachteilhaft an diesem Verfahren ist, dass das Zeitintervall relativ lang gewählt werden muss, beispielsweise 30 sec. Tritt in diesem Zeitintervall ein einzelner Messwert außerhalb des gewählten Bereichs für die Beleuchtungsstärken auf, verhindert dieser einzelne Messwert eine Beurteilung der Lichtsituation aufgrund der anderen Messwerte. Die Information der anderen Messwerte wird bei diesem Verfahren somit nicht genutzt.

In der DE 101 16 490 A1 ist ein Verfahren zum automatischen Steuern von Beleuchtungseinrichtungen eines Kraftfahrzeugs beschrieben. Ein Helligkeitssensor gibt Signale ab. Die Beleuchtungseinrichtungen werden nach einem Zeitintervall ausgeschaltet, das zu dem Zeitpunkt beginnt, zu dem die Signale eine Schwelle unter- bzw. überschreiten. Die Länge dieses Zeitintervalls ist bei dem beschriebenen Verfahren veränderbar. Unterschreitet die Helligkeit während des Zeitintervalls kurzzeitig die Schwelle, wird die Zeitzählung während dieser Zeit ausgesetzt. Unterschreitet die Helligkeit jedoch vor Ablauf des Zeitintervalls eine zweite Schwelle, bleiben die Beleuchtungseinrichtungen eingeschaltet und das Zeitintervall wird zurückgesetzt. Auch bei dem in dieser Druckschrift beschriebenen Verfahren ergibt sich das Problem der Wahl der Länge des Zeitintervalls. Außerdem wird die Historie der Messwerte nicht ausreichend berücksichtigt.

Aus der US 3,828,220 ist ein Verfahren zum Steuern von Fahrzeugscheinwerfern bekannt, bei dem das Abblendlicht in Abhängigkeit von der Intensität der Straßenbeleuchtung an- und ausgeschaltet wird. Hierfür wird das Umgebungslicht mittels eines Lichtsensors aufgenommen. Das Signal des Detektors wird so verarbeitet, dass man ein Ausgangssignal mit dem Wert 0 erhält, wenn Tageslicht empfangen wird oder Licht, dessen Intensität nicht variiert. Falls jedoch Straßenbeleuchtung empfangen wird, dessen Lichtintensität mit einer bestimmten Frequenz variiert, ergibt sich ein Ausgangssignal mit einer bestimmten Frequenz. Dieses Ausgangssignal wird einem Pulsgenerator und einem Zähler zugeführt. Im Ergebnis wird anhand des Zählerstands ermittelt, ob das Inverse eines Minimums der Straßenlichtintensität erreicht wurde und in Abhängigkeit hiervon das Abblendlicht für ein kurzes Zeitintervall ausgeschaltet.

Es ist die Aufgabe der vorliegenden Erfindung, ein Verfahren und eine Vorrichtung der eingangs genannten Art bereitzustellen, mit denen schnell und zuverlässig die Lichtverhältnisse in der Umgebung eines sich bewegenden Objekts erkannt werden können und eine nach außen abstrahlende lichttechnische Einrichtung eines Fahrzeugs so gesteuert werden kann, dass die Lichtsituation in der Umgebung des Fahrzeugs für den Betrieb des Fahrzeugs in korrekter Weise berücksichtigt wird.

Diese Aufgabe wird durch ein Verfahren zum Erkennen der Lichtverhältnis in der Umgebung eines sich bewegenden Objekts mit den Merkmalen des Anspruchs 1, durch ein Verfahren zum Steuern einer nach außen abstrahlenden lichttechnischen Einrichtung eines Fahrzeugs mit den Merkmalen des Anspruchs 12 und eine Vorrichtung zum Steuern einer nach außen abstrahlenden lichttechnischen Einrichtung eines Fahrzeugs mit den Merkmalen des Anspruchs 15 gelöst. Vorteilhafte Aus- und Weiterbildungen ergeben sich aus den Unteransprüchen.

Bei dem erfindungsgemäßen Verfahren zum Erkennen der Lichtverhältnisse in der Umgebung eines sich bewegenden Objekts wird die Beleuchtungsstärke fortlaufend gemessen, in Abhängigkeit von der jeweils gemessenen Beleuchtungsstärke dieser ein Zählwert zugeordnet und in einem Zähler werden die Zählwerte addiert und anhand des Zählerstandes werden die aktuellen Lichtverhältnisse erkannt.

Der Vorteil des erfindungsgemäßen Verfahrens liegt darin, dass alle Messwerte für die Beleuchtungsstärke berücksichtigt werden können, sie jedoch in Abhängigkeit von ihrer Wichtigkeit für die zu erkennenden Lichtverhältnisse unterschiedlich stark berücksichtigt werden können. Bei der Zuordnung der jeweiligen Beleuchtungsstärke zu einem Zählwert, können Parameter definiert werden, welche zu einer unterschiedlichen Gewichtung der Messwerte für die Beleuchtungsstärke führen. Es hat sich herausgestellt, dass hierdurch verschiedene Lichtverhältnisse schnell und eindeutig unterschieden werden können. Dabei ist es nicht erforderlich, bestimmte Zeitintervalle festzulegen, die abgewartet werden müssen, bis die Lichtverhältnisse erkannt werden. Die Zeit, die man benötigt, um bestimmte Lichtverhältnisse zu erkennen, häng vielmehr nur von der Beleuchtungssituation und den gewählten Parametern bei der Zuordnung der Beleuchtungsstärke zu den Zählwerten ab.

Bei dem erfindungsgemäßen Verfahrens können zum einen die messbaren Beleuchtungsstärken in Wertebereiche unterteilt und jedem Wertebereich ein Zählwert zugeordnet werden. Durch die Festlegung der Wertebereiche kann das erfindungsgemäße Verfahren sehr gut an verschiedene Lichtverhältnisse angepasst werden. Für verschiedene zu erkennende Lichtverhältnisse gibt es nämlich häufig Bereiche der Beleuchtungsstärke, die besonders relevant sind und andere Bereiche, die nicht oder nur mit sehr geringer Gewichtung berücksichtigt werden müssen. Die Wertebereiche können hieran angepasst werden. In den relevanten Bereichen umfasst ein Wertebereich nur ein kleines Beleuchtungsstärkenintervall, in den nicht relevanten Bereichen kann ein Wertebereich ein sehr großes Beleuchtungsstärkenintervall umfassen.

Zum anderen kann bei dem erfindungsgemäßen Verfahren jeder Beleuchtungsstärke ein Gewichtungsfaktor zugeordnet werden und die Zählwerte ergeben sich aus den gewichteten Beleuchtungsstärken.

Dabei haben bzw. hat die Zählwerte bzw. der Zählwert für Beleuchtungsstärken oberhalb eines ersten Beleuchtungsschwellwerts ein anderes Vorzeichen, als die Zählwerte oder der Zählwert für Beleuchtungsstärken unterhalb dieses ersten Beleuchtungsschwellwerts.

Es hat sich herausgestellt, dass mit dem erfindungsgemäßen Verfahren die Lichtverhältnisse für eine frühe Dämmerung besonders gut erkannt werden können. In diesem Fall ist der erste Beleuchtungsschwellwert in einem Bereich zwischen etwa 4.500 Ix und etwa 6.000 Ix, vorzugsweise zwischen etwa 4.700 Ix und etwa 5.000 Ix. Besonders bevorzugt liegt der erste Beleuchtungsschwellwert bei etwa 4.800 Ix, um die Lichtverhältnisse für eine frühe Dämmerung zu erkennen.

Gemäß einer weiteren bevorzugten Ausgestaltung des erfindungsgemäßen Verfahrens ist bzw. sind der Zählwert bzw. die Zählwerte für Beleuchtungsstärken unterhalb eines zweiten Beleuchtungsschwellwerts 0. Zum Erkennen der Lichtverhältnisse für eine frühe Dämmerung liegt der zweite Beleuchtungsschwellwert in einem Bereich zwischen etwa 1.000 Ix und etwa 1.600 Ix, bevorzugt liegt er bei etwa 1.400 Ix. Der größte Zählwert zum Erkennen der Lichtverhältnisse für eine frühe Dämmerung liegt bevorzugt in einem Bereich zwischen etwa 1.401 Ix und 2.100 Ix. Es hat sich herausgestellt, dass durch die Wahl dieser Parameter die Lichtverhältnisse für eine frühe Dämmerung eindeutig erkannt werden können.

Gemäß einer bevorzugten Ausgestaltung des erfindungsgemäßen Verfahrens werden die Zählwerte fortlaufend dem Zählerstand hinzuaddiert. Der Zählerstand wird somit nicht innerhalb bestimmter Zeitabstände zurückgesetzt. Es wird jedoch darauf hingewiesen, dass die Addition eines negativen Zählwerts zu einer Verringerung des Zählerstands führt. Ferner wird vorzugsweise der Zählerstand auf einen minimalen und einen maximalen Wert begrenzt.

Das erfindungsgemäße Verfahren zum Steuern einer nach außen abstrahlenden lichttechnischen Einrichtung eines Fahrzeugs umfasst die Schritte des vorgenannten Verfahrens zum Erkennen der Lichtverhältnisse in der Umgebung eines sich bewegenden Objekts. Das bewegende Objekt ist in diesem Fall das Fahrzeug. Die lichttechnische Einrichtung des Fahrzeugs kann der Fahrzeugscheinwerfer sowie die Heckleuchte des Fahrzeugs sein. Das erfindungsgemäße Verfahren ist dadurch gekennzeichnet, dass die lichttechnische Einrichtung eingeschaltet wird, wenn die Lichtverhältnisse für eine frühe Dämmerung erkannt werden.

Gemäß einer bevorzugten Weiterbildung dieses Verfahrens wird die lichttechnische Einrichtung nach einem Ausschaltverzögerungsintervall ausgeschaltet, wenn die Lichtverhältnisse für eine frühe Dämmerung nicht mehr erkannt werden. Vorzugsweise wird die lichttechnische Einrichtung jedoch nur dann ausgeschaltet, wenn sich die Beleuchtungsstärke in Richtung höher Beleuchtungsstärken geändert hat, d.h. die Lichtverhältnisse für die frühe Dämmerung nicht in die Lichtverhältnisse für Nacht übergegangen sind. Das Ausschaltverzögerungsintervall liegt bevorzugt in einem Bereich zwischen etwa 180 sec und etwa 320 sec, besonders bevorzugt ist ein Ausschaltverzögerungsintervall von etwa 255 sec.

Die erfindungsgemäße Vorrichtung zum Steuern einer nach außen abstrahlenden lichttechnischen Einrichtung eines Fahrzeugs umfasst einen Lichtsensor zum fortlaufenden Messen der Beleuchtungsstärke in der Umgebung des Fahrzeugs, eine mit dem Lichtsensor verbundene Recheneinheit, die in Abhängigkeit von der jeweils gemessenen Beleuchtungsstärke einen dieser Beleuchtungsstärke zugeordneten Zählwert ermittelt, einen mit der Recheneinheit verbundenen Zähler, in dem die Zählwerte addiert werden, und eine mit dem Zähler verbundene Auswerteeinheit, welche an Hand des Zählerstandes die aktuellen Lichtverhältnisse erkennt und in Abhängigkeit von den Lichtverhältnissen die lichttechnische Einrichtung steuert.

Die lichttechnische Einrichtung des Fahrzeugs ist vorzugsweise ein Scheinwerfer und/oder eine Heckleuchte.

Gemäß einer bevorzugten Ausgestaltung der erfindungsgemäßen Vorrichtung ist der Recheneinheit ein Speicher zugeordnet, in dem verschiedene Zählwerte gespeichert sind, die verschiedenen Wertebereichen für die messbaren Beleuchtungsstärken zugeordnet sind. Gemäß einer anderen Ausgestaltung sind in dem Speicher jeweils Gewichtungsfaktoren für die messbaren Beleuchtungsstärken gespeichert, wobei die Recheneinheit in diesem Fall den jeweiligen Zählwert aus den gewichteten Beleuchtungsstärken berechnet.

Ferner können in dem Speicher für bestimmte Lichtverhältnisse charakteristische Parameter gespeichert sein. Auf diese Weise lässt sich die erfindungsgemäße Vorrichtung sehr einfach an verschiedene Lichtverhältnisse anpassen. In einer bevorzugten Ausgestaltung der erfindungsgemäßen Vorrichtung sind in dem Speicher die für eine frühere Dämmerung charakteristischen Parameter gespeichert.

Die Erfindung wird nun anhand von Ausführungsbeispielen mit Bezug zu den Zeichnungen erläutert:
- Fig. 1: zeigt schematisch ein Ausführungsbeispiel der erfindungsgemäßen Vorrichtung zum Steuern einer nach außen abstrahlenden lichttechnischen Einrichtung eines Fahrzeugs und
- Fig. 2: zeigt Messdaten, die bei dem erfindungsgemäßen Verfahren zum Erkennen der Lichtverhältnisse in der Umgebung eines Fahrzeugs gewonnen wurden.

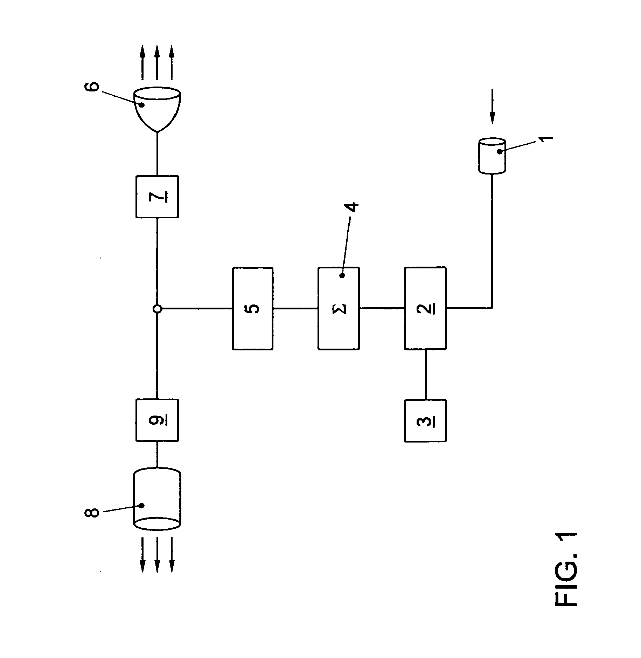

Zunächst wird ein Ausführungsbeispiel des Verfahrens zum Erkennen der Lichtverhältnisse in der Umgebung eines sich bewegenden Objekts beschrieben. In dem Ausführungsbeispiel ist das sich bewegende Objekt ein Kraftfahrzeug. Durch das Verfahren sollen die Lichtverhältnisse bei Dämmerung, insbesondere bei der frühen Dämmerung, erkannt werden. Vorrichtungstechnische Einrichtungen zur Durchführung dieses Verfahrens sind in Fig. 1 gezeigt.

Das Fahrzeug ist mit einem Lichtsensor 1 ausgerüstet, der die auf ein Messfeld fallende Beleuchtungsstärke fortlaufend misst. Der Lichtsensor 1 kann Teil einer herkömmlichen Regen/Lichtsensorik sein. Der Messbereich des Lichtsensors 1 reicht von 0 Ix bis 150.000 Ix. Der Messbereich wird in Wertebereiche unterteilt. Jedem Wertebereich wird ein Zählwert zugeordnet. Die zum Erkennen der Dämmerung gewählten Wertebereiche und Zuordnungen sind aus der folgenden Tabelle ersichtlich:

| **Wertebereich in Ix** | | **Zählwert** |
|---|---|---|
| 0 | 700 | 0 |
| 701 | 1.400 | 0 |
| 1.401 | 2.000 | 4 |
| 2.101 | 2.800 | 3 |
| 2.801 | 3.500 | 2 |
| 3.501 | 4.200 | 1 |
| 4.201 | 4.800 | 0 |
| 4.801 | 150.000 | -0,3 |

Von dem Lichtsensor 1 wird alle 5 ms ein Messwert aufgenommen und an eine Recheneinheit 2 übertragen. Diese überträgt fortlaufend Zählwerte an den Zähler 4. Es geht somit jeder Messwert in die Analyse der Lichtverhältnisse ein. Ferner geht die Historie in die Analyse der Lichtverhältnisse ein, da der Zähler 4 nicht nach bestimmten Zeitintervallen zurückgesetzt wird. Allenfalls bei einem Ausschalten des Motors könnte der Zähler auf einen Startwert gesetzt werden.

Die vorstehende Tabelle ist in einem Speicher 3 gespeichert, der mit der Recheneinheit 2 verbunden ist. Je nachdem, in welchen Wertebereich die gemessene Beleuchtungsstärke fällt, ordnet die Recheneinheit 2 dem Messwert den aus der vorstehenden Tabelle ersichtlichen Zählwert zu. Dieser Zählwert wird zu dem bisherigen Wert des Zählers hinzuaddiert. Wird beispielsweise eine Beleuchtungsstärke von 2.200 Ix gemessen, wird diesem Messwert der Zählwert 3 zugeordnet und dem Zählerstand der Wert 3 hinzuaddiert. Wird eine Beleuchtungsstärke von 1.200 Ix gemessen, wird diesem Messwert der Zählwert 0 zugeordnet, so dass der Zählerstand gleich bleibt. Wird eine Beleuchtungsstärke gemessen, die größer als 4.800 Ix ist, wird einer solchen Beleuchtungsstärke der Zählwert -0,3 zugeordnet, so dass sich der Zählerstand um 0,3 verringert.

Die Werte des Zählers 4 sind allerdings auf einen bestimmten Wertebereich begrenzt. In dem gezeigten Ausführungsbeispiel ist der Minimalwert 0 und der Maximalwert 100. Hierdurch wird verhindert, dass bei langen Fahrten mit Beleuchtungsstärken oberhalb von 4.800 Ix und bei Fahrten in der Dämmerung mit Beleuchtungsstärken zwischen 1.401 Ix und 4.200 Ix sich der Zählerstand immer weiter verringert bzw. erhöht.

In der in dem Speicher 3 abgelegten Tabelle sind somit die Parameter enthalten, die zum Erkennen der jeweiligen Lichtverhältnisse von entscheidender Bedeutung ist. Es hat sich dabei herausgestellt, dass für das besonders problematische Erkennen der Dämmerung, insbesondere der frühen Dämmerung, sehr hohen Beleuchtungsstärken hinsichtlich der Lichtverhältnisse für die Dämmerung ein negativer Zählwert zugeordnet wird. Im vorliegenden Ausführungsbeispiel liegt dieser erste Beleuchtungsschwellwert bei 4.800 Ix. Ist das Fahrzeug somit längere Zeit bei Dämmerung gefahren, bei der typischerweise Beleuchtungsstärken zwischen 2.000 Ix und 2.500 Ix auftreten, erhöht sich der Zählerstand im Zähler 4 bis zum Maximalwert. Überschreitet die Beleuchtungsstärke dann den ersten Beleuchtungsschwellwert bei 4.800 Ix, verringert sich der Zählerstand sukzessive mit jedem Messwert um 0,3.

In Wertebereichen, welche charakteristische Beleuchtungsstärken für die Dämmerung umfassen, steigt der Zählwert mit geringer werdenden Beleuchtungsstärken bis zu dem Maximalwert 4 im Wertebereich zwischen 1.401 Ix bis 2.100 Ix an. Bei sehr geringen Beleuchtungsstärken ist der Zählwert 0. Solche Beleuchtungsstärken treten einerseits bei Nachtfahrten auf und andererseits bei sehr starken Abschattungen. Der zweite Beleuchtungsschwellenwert unterhalb dem der Zählwert 0 ist, liegt in dem vorliegenden Ausführungsbeispiel bei etwa 1.400 Ix.

Von der Auswerteeinheit 5 kann nun sehr einfach ermittelt werden, ob die Lichtverhältnisse für Dämmerung vorliegen. Ist der Zählerstand größer als ein Schwellwert für die Dämmerung, liegen die Lichtverhältnisse für Dämmerung vor, ist der Zählerstand kleiner oder gleich diesen Schwellenwert, liegen keine für Dämmerung charakteristische Lichtverhältnisse vor. In dem gezeigten Ausführungsbeispiel liegt der Schwellenwert für Dämmerung bei 70.

Im Folgenden wird nun ein Ausführungsbeispiel des Verfahrens zum Steuern einer nach außen abstrahlenden lichttechnischen Einrichtung eines Fahrzeugs beschrieben. Die lichttechnische Einrichtung ist das Fahrlicht des Fahrzeugs, d.h. üblicherweise das Abblendlicht und das Schlusslicht. Dem Verfahren ist das vorstehend beschriebene Verfahren zum Erkennen der Lichtverhältnisse vorgeschaltet. Wird in diesem Ausführungsbeispiel der Zustand der Dämmerung in der Umgebung des Fahrzeugs erkannt, gibt die Auswerteeinheit 5 entsprechende Signale an die Steuergeräte 7 und 9 des Scheinwerfers 6 für das Abblendlicht und des Schlusslichts 8 der Heckleuchte. Die Steuergeräte 7 und 9 schalten bei einem solchen Signal das Abblendlicht und das Schlusslicht ein. Das Fahrlicht bleibt so lange eingeschaltet, bis die Auswerteeinheit 5 den Steuergeräten 7 und 9 ein Signal gibt, welches anzeigt, dass der Dämmerungszustand nicht mehr besteht. In dem vorliegenden Ausführungsbeispiel sind die Parameter so gewählt, dass bei einem Übergang von der Dämmerung in eine Lichtsituation bei Nacht das Fahrlicht eingeschaltet bleibt, da die Zählwerte für bei Nacht auftretende Beleuchtungsstärken 0 sind, so dass sich der Zählerstand im Zähler 4 nicht verändert und üblicherweise bei dem Maximalwert 100 verbleibt. Fährt das Fahrzeug in die Morgendämmerung, bei welcher die Beleuchtungsstärken langsam ansteigen, wird zu einem bestimmten Zeitpunkt der erste Beleuchtungsschwellwert bei 4.800 Ix überschritten. Ab diesem Zeitpunkt verringert sich der Zählerstand im Zähler 4, bis er den Schwellwert für die Dämmerung unterschreitet. Das Fahrlicht wird dann automatisch ausgeschaltet. Bei dem vorstehend beschriebenen Ausführungsbeispiel würde ein Ausschalten des Lichts nach 100 Messwerten, d.h. nach 50 sec erfolgen. Um zu vermeiden, dass das Licht aufgrund einer außergewöhnlichen Lichtsituation unbeabsichtigt ausgeschaltet wird, ist in einem Speicher der Auswerteeinheit 5 ein Ausschaltverzögerungsintervall gespeichert. Dieses Ausschaltverzögerungsintervall ist in dem vorliegenden Ausführungsbeispiel 255 sec. Erst nach Ablauf dieses Zeitintervalls überträgt die Auswerteeinheit 5 an die Steuereinheiten 7 und 9 das Signal, dass kein Dämmerungszustand mehr vorliegt.

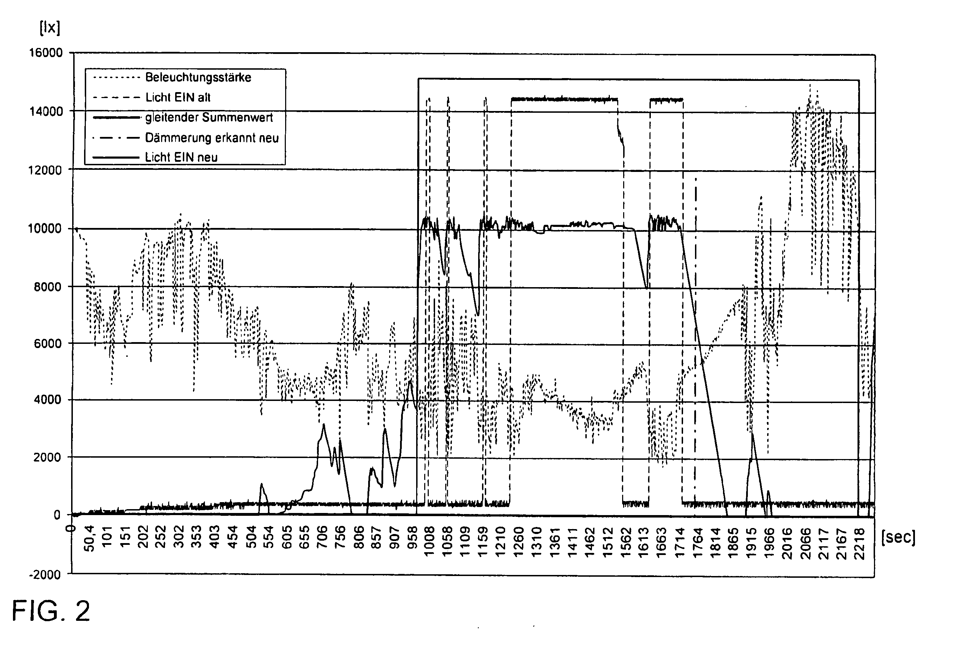

In Fig. 2 sind Messdaten gezeigt, die das Verfahren zum Erkennen der Dämmerung und das darauf aufbauende Steuerungsverfahren für das Fahrlicht veranschaulichen. Zum Vergleich ist auch eine Kurve gemäß einem Steuerverfahren nach dem Stand der Technik gezeigt.

Die gepunktete Linie zeigt die Beleuchtungsstärke während einer Fahrt, die ca. 36 min dauerte. Es ist zu erkennen, dass die Beleuchtungsstärke sehr stark schwankt. Die dünn gestrichelte Linie (Licht EIN alt) zeigt das Steuersignal für ein Fahrlicht, das nach einem Verfahren des Standes der Technik ermittelt wurde, wie es in der Einleitung beschrieben worden ist. Die Kurve zeigt, dass bei dem Verfahren nach dem Stand der Technik das Licht in bestimmten kritischen Bereichen für die Beleuchtungsstärke häufig in sehr kurzen Zeitintervallen ein- und ausgeschaltet wird. Ein solches Verhalten des Fahrlichts ist unerwünscht.

Die durchgezogene fette Linie zeigt den sogenannten gleitenden Summenwert des Zählerstandes des Zählers 4. Die Kurve nähert sich einer Rechteckkurve an. Der Schwellwert zum Erkennen der Dämmerung wurde so gewählt, dass die Kurve für das Erkennen der Dämmerung eine Rechteckkurve ist (Kurve Dämmerung erkannt neu). Aufgrund des Ausschaltverzögerungsintervalls ist die Kurve für das Ausgangsignal der Auswerteeinheit 5 auch eine Rechteckfunktion, wobei die ansteigende Flanke mit der Kurve für das Erkennen der Dämmerung zusammenfällt, die abfallende Kante, d.h. der Zeitpunkt, zu dem das Licht ausgeschaltet wird, ist jedoch um das Ausschaltverzögerungsintervall zeitlich nach hinten versetzt.

Es wird darauf hingewiesen, dass das vorstehende Ausführungsbeispiel zwar nur ein Verfahren zum Erkennen der Dämmerung und ein damit verbundenes Verfahren bzw. eine damit verbundene Vorrichtung zum Steuern des Fahrlichts eines Fahrzeugs beschreibt, die Erfindung jedoch auch zum Erkennen anderer Lichtverhältnisse verwendet werden kann. Es ist in diesem Fall nur erforderlich, die Wertebereiche und die entsprechenden Zuordnungen zu den Zählwerten zu ändern. Die Wertebereiche können an die Lichtverhältnisse, die erkannt werden sollen, angepasst werden. Bei der Zuordnung zu den Zählwerten können auch andere Funktionen, wie beispielsweise gewichtete Messwerte oder dgl. verwendet werden.

### BEZUGSZEICHENLISTE

- 1: Lichtsensor
- 2: Recheneinheit
- 3: Speicher
- 4: Zähler
- 5: Auswerteeinheit
- 6: Scheinwerfer
- 7: Steuergerät
- 8: Heckleuchte
- 9: Steuergerät

## Patentansprüche

1. Verfahren zum Erkennen der Lichtverhältnisse in der Umgebung eines sich bewegenden Objekts, bei dem
- die Beleuchtungsstärke fortlaufend gemessen wird,
- in Abhängigkeit von der jeweils gemessenen Beleuchtungsstärke dieser ein Zählwert zugeordnet wird und in einem Zähler (4) die Zählwerte addiert werden und
- an Hand des Zählerstandes die aktuellen Lichtverhältnisse erkannt werden,
**dadurch gekennzeichnet, dass**
- die messbaren Beleuchtungsstärken in Wertebereiche unterteilt werden und jedem Wertebereich ein Zählwert zugeordnet wird oder
- jeder Beleuchtungsstärke ein Gewichtungsfaktor zugeordnet wird und die Zählwerte sich aus den gewichteten Beleuchtungsstärken ergeben und
- dass der/die Zählwert(e) für Beleuchtungsstärken oberhalb eines ersten Beleuchtungsschwellwerts ein anderes Vorzeichen hat/haben, als der/die Zählwert(e) für Beleuchtungsstärken unterhalb dieses ersten Beleuchtungsschwellwerts.

2. Verfahren nach Anspruch 1, **dadurch gekennzeichnet, dass** die Lichtverhältnisse für eine frühe Dämmerung erkannt werden.

3. Verfahren nach Anspruch 1 oder 2, **dadurch gekennzeichnet, dass** der erste Beleuchtungsschwellwert in einem Bereich zwischen etwa 4500 Ix und etwa 6000 Ix liegt.

4. Verfahren nach Anspruch 1 oder 2, **dadurch gekennzeichnet, dass** der erste Beleuchtungsschwellwert in einem Bereich zwischen etwa 4700 Ix und etwa 5000 Ix liegt.

5. Verfahren nach Anspruch 1 oder 2, **dadurch gekennzeichnet, dass** der erste Beleuchtungsschwellwert bei etwa 4800 Ix liegt.

6. Verfahren nach einem der Ansprüche 2 bis 5, **dadurch gekennzeichnet, dass** der/die Zählwert(e) für Beleuchtungsstärken unterhalb eines zweiten Beleuchtungsschwellwerts Null ist/sind.

7. Verfahren nach Anspruch 6, **dadurch gekennzeichnet, dass** der zweite Beleuchtungsschwellwert in einem Bereich zwischen etwa 1000 Ix und etwa 1600 Ix liegt.

8. Verfahren nach Anspruch 7, **dadurch gekennzeichnet, dass** der zweite Beleuchtungsschwellwert bei etwa 1400 Ix liegt.

9. Verfahren nach einem der Ansprüche 2 bis 8, **dadurch gekennzeichnet, dass** Beleuchtungsstärken in einem Bereich zwischen etwa 1401 Ix und 2100 Ix der größte Zählwert zugeordnet ist.

10. Verfahren nach einem der vorhergehenden Ansprüche, **dadurch gekennzeichnet, dass** die Zählerwerte fortlaufend dem Zählerstand hinzuaddiert werden.

11. Verfahren nach Anspruch 10, **dadurch gekennzeichnet, dass** der Zählerstand auf einen minimalen und einen maximalen Wert begrenzt wird.

12. Verfahren zum Steuern einer nach außen abstrahlenden lichttechnischen Einrichtung eines Fahrzeugs, umfassend die Schritte des Verfahrens zum Erkennen der Lichtverhältnisse in der Umgebung eines sich bewegenden Objekts nach einem der vorhergehenden Ansprüche, **dadurch gekennzeichnet, dass** die lichttechnische Einrichtung eingeschaltet wird, wenn die Lichtverhältnisse für eine frühe Dämmerung erkannt werden.

13. Verfahren nach Anspruch 12, **dadurch gekennzeichnet, dass** die lichttechnische Einrichtung nach einem Ausschaltverzögerungsintervall ausgeschaltet wird, wenn die Lichtverhältnisse für eine frühe Dämmerung nicht mehr erkannt werden.

14. Verfahren nach Anspruch 13, **dadurch gekennzeichnet, dass** das Ausschaltverzögerungsintervall in einem Bereich zwischen etwa 180 sec und etwa 320 sec liegt.

15. Vorrichtung zum Steuern einer nach außen abstrahlenden lichttechnischen Einrichtung eines Fahrzeugs mit
- einem Lichtsensor (1) zum fortlaufenden Messen der Beleuchtungsstärke in der Umgebung des Fahrzeugs,
- einer mit dem Lichtsensor (1) verbundenen Recheneinheit (2), die in Abhängigkeit von der jeweils gemessenen Beleuchtungsstärke einen dieser Beleuchtungsstärke zugeordneten Zählwert ermittelt,
- einem mit der Recheneinheit (2) verbundenen Zähler (4), in dem die Zählwerte addiert werden, und
- einer mit dem Zähler (4) verbundenen Auswerteeinheit (5), welche an Hand des Zählerstandes die aktuellen Lichtverhältnisse erkennt und in Abhängigkeit von den Lichtverhältnissen die lichttechnische Einrichtung steuert,
**dadurch gekennzeichnet, dass**
- der Recheneinheit (2) ein Speicher (3) zugeordnet ist, in dem verschiedene Zählwerte gespeichert sind, die verschiedenen Wertebereichen für die messbaren Beleuchtungsstärken zugeordnet sind, oder
- der Recheneinheit (2) ein Speicher (3) zugeordnet ist, in dem für die messbaren Beleuchtungsstärken jeweils Gewichtungsfaktoren gespeichert sind, und die Recheneinheit (2) den jeweiligen Zählwert aus den gewichteten Beleuchtungsstärken berechnet, und
- dass der/die Zählwert(e) für Beleuchtungsstärken oberhalb eines ersten Beleuchtungsschwellwerts ein anderes Vorzeichen hat/haben, als der/die Zählwert(e) für Beleuchtungsstärken unterhalb dieses ersten Beleuchtungsschwellwerts.

16. Vorrichtung nach Anspruch 15, **dadurch gekennzeichnet, dass** in dem Speicher (3) für bestimmte Lichtverhältnisse charakteristische Parameter gespeichert sind.

17. Vorrichtung nach Anspruch 16, **dadurch gekennzeichnet, dass** in dem Speicher (3) die für eine frühe Dämmerung charakteristischen Parameter gespeichert sind.

## Claims

1. Method for detecting the light conditions in the surroundings of a moving object, in the case of which
- the illuminance is measured continuously,
- depending on the respectively measured illuminance, the latter is assigned a count value, and the count values are added in a counter (4), and
- the counter content is used to detect the current light conditions,
**characterized**
- **in that** the measurable illuminances are subdivided into value ranges and each value range is assigned a count value, or
- each illuminance is assigned a weighting factor, and the count values result from the weighted illuminances, and
- **in that** the count value(s) for illuminances above a first illuminance threshold value has/have a different sign than the count value(s) for illuminances below this first illuminance threshold value.

2. Method according to Claim 1, **characterized in that** the light conditions for early twilight are detected.

3. Method according to Claim 1 or 2, **characterized in that** the first illuminance threshold value is in a range of between approximately 4500 lx and approximately 6000 lx.

4. Method according to Claim 1 or 2, **characterized in that** the first illuminance threshold value is in a range of between approximately 4700 lx and approximately 5000 lx.

5. Method according to Claim 1 or 2, **characterized in that** the first illuminance threshold value is at approximately 4800 lx.

6. Method according to one of Claims 2 to 5, **characterized in that** the count value(s) for illuminances is/are below a second illuminance threshold value.

7. Method according to Claim 6, **characterized in that** the second illuminance threshold value is in a range of between approximately 1000 lx and approximately 1600 lx.

8. Method according to Claim 7, **characterized in that** the second illuminance threshold value is at approximately 1400 lx.

9. Method according to one of Claims 2 to 8, **characterized in that** the largest count value is assigned to illuminances in a range of between approximately 1401 lx and 2100 lx.

10. Method according to one of the preceding claims, **characterized in that** the count values are continuously added to the counter content.

11. Method according to Claim 10, **characterized in that** the counter content is limited to a minimum and a maximum value.

12. Method for controlling an outwardly emitting lighting device of a vehicle, comprising the steps of the method for detecting the light conditions in the surroundings of a moving object according to one of the preceding claims, **characterized in that** the lighting device is switched on when the light conditions for early twilight are detected.

13. Method according to Claim 12, **characterized in that** the lighting device is switched off after a switch off delay interval when the light conditions for early twilight are no longer detected.

14. Method according to Claim 13, **characterized in that** the switch off delay interval is in a range of between approximately 180 sec and approximately 320 sec.

15. Apparatus for controlling an outwardly emitting lighting device of a vehicle, comprising
- a light sensor (1) for continuously measuring the illuminance in the surroundings of the vehicle,
- an arithmetic logic unit (2) which is connected to the light sensor (1) and, depending on the respectively measured illuminance, determines a count value assigned to said illuminance,
- a counter (4) which is connected to the arithmetic logic unit (2) and in which the count values are added, and
- an evaluation unit (5), which is connected to the counter (4), detects the current light conditions with the aid of the counter content and controls the lighting device as a function of the light conditions,
**characterized**
- **in that** the arithmetic logic unit (2) is assigned a memory (3) in which there are stored various count values that are assigned to various value ranges for the measurable illuminances, or
- the arithmetic logic unit (2) is assigned a memory (3) in which weighting factors are respectively stored for the measureable illuminances, and the arithmetic logic unit (2) calculates the respective count value from the weighted illuminances, and
- **in that** the count value(s) for illuminances above a first illuminance threshold value has/have a different sign than the count value(s) for illuminances below this first illuminance threshold value.

16. Apparatus according to Claim 15, **characterized in that** parameters characteristic of specific light conditions are stored in the memory (3).

17. Apparatus according to Claim 16, **characterized in that** parameters characteristic of early twilight are stored in the memory (3).

## Revendications

1. Procédé pour détecter le niveau de luminosité ambiante d'un objet en déplacement, dans lequel
- on mesure en continu l'intensité de l'éclairage
- en fonction de chaque intensité d'éclairage mesurée, on attribue à celle-ci une valeur de comptage et on additionne les valeurs de comptage dans un compteur (4), et
- on détecte le niveau de luminosité courante à partir de l'état du compteur,
**caractérisé en ce que**
- on subdivise les intensités d'éclairage mesurables en plages de valeurs et on attribue une valeur de comptage à chaque plage de valeurs, ou
- on attribue un facteur de pondération à chaque intensité d'éclairage et les valeurs de comptage résultent des intensités d'éclairage pondérées,
- et **en ce que** la/les valeur(s) de comptage des intensités d'éclairage située(s) au-dessus d'une première valeur de seuil d'éclairage a/ont un signe différent de la/des valeur(s) de comptage des intensités d'éclairage située(s) au-dessous de cette première valeur de seuil d'éclairage.

2. Procédé selon la revendication 1, **caractérisé en ce qu'**on détecte le niveau de luminosité d'un crépuscule précoce.

3. Procédé selon la revendication 1 ou 2, **caractérisé en ce que** la première valeur de seuil d'éclairage se situe dans une plage entre 4500 lx environ et 6000 lx environ.

4. Procédé selon la revendication 1 ou 2, **caractérisé en ce que** la première valeur de seuil d'éclairage se situe dans une plage entre 4700 lx environ et 5000 lx environ.

5. Procédé selon la revendication 1 ou 2, **caractérisé en ce que** la première valeur de seuil d'éclairage se situe à 4800 lx environ.

6. Procédé selon une des revendications 2 à 5, **caractérisé en ce que** la/les valeur(s) de comptage des intensités d'éclairage située(s) au-dessous d'une deuxième valeur de seuil d'éclairage est/sont nulle(s).

7. Procédé selon la revendication 6, **caractérisé en ce que** la deuxième valeur de seuil d'éclairage se situe dans une plage entre 1000 lx environ et 1600 lx environ.

8. Procédé selon la revendication 7, **caractérisé en ce que** la deuxième valeur de seuil d'éclairage se situe à 1400 lx environ.

9. Procédé selon une des revendications 2 à 8, **caractérisé en ce que** la valeur de comptage la plus élevée est attribuée aux intensités d'éclairage situées dans une plage entre 1401 lx environ et 2100 lx.

10. Procédé selon une des revendications précédentes, **caractérisé en ce que** les valeurs de comptage sont additionnées en continu à l'état du compteur.

11. Procédé selon la revendication 10, **caractérisé en ce que** l'état du compteur est limité à une valeur minimale et à une valeur maximale.

12. Procédé pour commander un appareillage technique rayonnant de la lumière vers l'extérieur, englobant les étapes du processus pour détecter le niveau de luminosité ambiante d'un objet en déplacement selon une des revendications précédentes, **caractérisé en ce que** l'appareillage technique de lumière est mis en route lorsqu'on détecte le niveau de luminosité d'un crépuscule précoce.

13. Procédé selon la revendication 12, **caractérisé en ce que** l'appareillage technique de lumière est arrêté après un intervalle de temporisation d'arrêt lorsqu'on ne détecte plus le niveau de luminosité d'un crépuscule précoce.

14. Procédé selon la revendication 13, **caractérisé en ce que** l'intervalle de temporisation d'arrêt se situe dans une plage entre 180 s environ et 320 s environ.

15. Dispositif pour commander un appareillage technique rayonnant de la lumière vers l'extérieur d'un véhicule, avec
- un capteur de lumière (1) pour la mesure en continu de l'intensité de l'éclairage ambiant du véhicule,
- une unité de calcul (2) reliée au capteur de lumière (1) qui, en fonction de chaque intensité d'éclairage mesurée, détermine une valeur de comptage attribuée à cette intensité d'éclairage,
- un compteur (4) relié à l'unité de calcul (2) dans lequel on additionne les valeurs de comptage, et
- une unité d'analyse (5) reliée au compteur (4), qui détecte le niveau de luminosité courante à partir de l'état du compteur et qui commande l'appareillage technique de lumière en fonction du niveau de luminosité,
**caractérisé en ce que**
- on attribue à l'unité de calcul (2), une mémoire (3) stockant différentes valeurs de comptage qui sont attribuées à différentes plages de valeurs pour des intensités d'éclairage mesurables, ou
- on attribue à l'unité de calcul (2), une mémoire (3) stockant chacun des facteurs de pondération des intensités d'éclairage mesurables, et l'unité de calcul (2) calcule la valeur de comptage correspondante à partir des intensités d'éclairage pondérées,
- et **en ce que** la/les valeur(s) de comptage des intensités d'éclairage située(s) au-dessus d'une première valeur de seuil d'éclairage a/ont un signe différent de la/des valeur(s) de comptage des intensités d'éclairage située(s) au-dessous de cette première valeur de seuil d'éclairage.

16. Dispositif selon la revendication 15, **caractérisé en ce que** pour un niveau défini de luminosité, on stocke des paramètres caractéristiques dans la mémoire (3).

17. Dispositif selon la revendication 16, **caractérisé en ce qu'**on stocke les paramètres caractéristiques du crépuscule précoce dans la mémoire (3).
